(19) Europäisches Patentamt
European Patent Office
Office européen des brevets

(11) Veröffentlichungsnummer: **0 359 101 B1**

(12) # EUROPÄISCHE PATENTSCHRIFT

(45) Veröffentlichungstag der Patentschrift: **22.02.95**

(51) Int. Cl.$^6$: **C08G 69/26**

(21) Anmeldenummer: **89116399.0**

(22) Anmeldetag: **06.09.89**

Die Akte enthält technische Angaben, die nach dem Eingang der Anmeldung eingereicht wurden und die nicht in dieser Patentschrift enthalten sind.

(54) **Polyamid und Film aus mindestens einer monomolekularen Schicht eines Polyamids.**

(30) Priorität: **07.09.88 DE 3830325**
**19.04.89 DE 3912823**
**19.04.89 DE 3912824**

(43) Veröffentlichungstag der Anmeldung:
**21.03.90 Patentblatt 90/12**

(45) Bekanntmachung des Hinweises auf die Patenterteilung:
**22.02.95 Patentblatt 95/08**

(84) Benannte Vertragsstaaten:
**DE**

(56) Entgegenhaltungen:
**EP-A- 0 230 539**
**EP-A- 0 251 072**
**EP-A- 0 281 954**
**US-A- 3 937 687**
**US-A- 3 957 733**

(73) Patentinhaber: **HOECHST AKTIENGESELL-SCHAFT**

**D-65926 Frankfurt (DE)**

(72) Erfinder: **Cherdron, Harald, Prof. Dr.**
**Eichenweg 40**
**D-6200 Wiesbaden-Naurod (DE)**
Erfinder: **Prass, Werner, Dr.**
**Bahnstrasse 19**
**D-6500 Mainz (DE)**
Erfinder: **Scheunemann, Ude, Dr.**
**Feldbergstrasse 12**
**D-6237 Liederbach (DE)**
Erfinder: **Lupo, Donald, Dr.**
**Am Holderbusch 28**
**D-6239 Eppstein/Taunus (DE)**

EP 0 359 101 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf spezielle Polyamide mit Alkylseitenketten, auf einen Film aus mindestens einer monomolekularen Schicht dieser Polyamide auf einem festen Schichtträger (= sogenannte Schichtelemente) und Verfahren zur Herstellung der Polyamide und der Schichtelemente.

Zur Herstellung von geordneten Schichten organischer Polymerer mit langkettigen Seitengruppen wird überwiegend das Langmuir-Blodgett (LB)-Verfahren benutzt. Bei diesem Verfahren werden Moleküle auf einer Wasseroberfläche gespreitet und durch Verkleinerung der Fläche pro Molekül die langen Alkylseitenketten parallel angeordnet. Bei konstantem Schub werden die Moleküle durch Ein- und Austauchen auf ein Substrat aufgezogen. Pro Tauchgang wird dabei eine monomolekulare Schicht unter Erhalt ihrer Ordnung übertragen.

Für den Aufbau von LB-Filmen verwendet man amphiphile Moleküle, d. h. Moleküle, die ein hydrophiles Ende (einen "Kopf") und ein hydrophobes Ende (einen "Schwanz") haben. Um eine höhere Stabilität der LB-Filme zu erreichen, wurden auch schon polymere LB-Filme hergestellt.

Hierzu wurden einmal monomere ungesättigte Amphiphile nach der Herstellung des Films polymerisiert. Man hat aber auch schon unmittelbar organische Polymere mit langen Alkylseitenketten zur Schichtherstellung eingesetzt (EP-A2-0 232 829). Bei beiden Arten von polymeren Filmen treten jedoch mehr Fehlstellen als bei monomeren Filmen auf. Bei der Polymerisation in der Schicht kommt es in nahezu allen Fällen zu einer Kontraktion der Schicht, mit der Ausbildung von Fehlstellen. Bei Filmen aus Polymeren führt die hohe Viskosität der Filme zu Problemen bei der Schichtübertragung.

Aus EP-A-0 230 539 ist es bekannt, daß sich amphiphile Polymere, z.B. Polyamide, nach dem Verfahren von Langmuir-Blodgett auf feste Substrate übertragen lassen. Die dort beschriebenen Moleküle sind jedoch starr und lassen sich nach diesem Verfahren nicht sehr gut übertragen.

Es bestand daher die Aufgabe, aus niedermolekularen Ausgangsprodukten Polykondensate zu gewinnen, die sich besonders gut auf Schichtträger übertragen lassen.

Die vorliegende Erfindung löst diese Aufgabe. Sie beruht auf der Beobachtung, daß Komponenten ohne jegliche $CH_2$-Gruppe in der Hauptkette zu steifen Polymeren führen, die sich nicht oder nur schlecht und ohne Ordnung im Film übertragen lassen.

Es wurden nun neue Polyamide gefunden, die die allgemeine Formel (I)

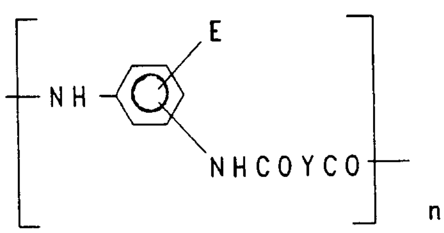

(I)

aufweisen, wobei

E = $-CO_2R^4$, $-CONR^4R^5$, $-NR^4R^5$-, $OR^6$ oder $OCOR^6$
$R^4$ = eine Alkylgruppe mit 6-26, vorzugsweise 6-24 C-Atomen,
$R^5$ = Wasserstoff oder eine Alkylgruppe mit 1-26, vorzugsweise 6-24 C-Atomen,
$R^6$ = eine Alkylgruppe mit 6-26, vorzugsweise 6-24, insbesondere 14-24 C-Atomen,
Y = $(CH_2)_a$ oder $(CH_2OCH_2)_b$,
a = eine ganze Zahl von 1 bis 12,
b = eine ganze Zahl von 1 bis 13,
n = eine ganze Zahl über 4

bedeutet.

Die verwendeten Polyamide sind streng alternierend aus Dicarbonsäure-und Diamin-Einheiten aufgebaut. Die unterschiedlichen Ordnungstendenzen von Polymerhauptkette (Tendenz zu Polymerknäuel) und Alkylseitenkette (Tendenz zur Kristallisation) können gleichzeitig verwirklicht werden. IR-spektroskopische Untersuchungen haben gezeigt, daß durch die Einführung mindestens einer $CH_2$-Gruppe in die Hauptkette des Polymeren diese an Steifigkeit verliert und der übertragene Film an Ordnung gewinnt. Dies ist ein Vorteil gegenüber den sehr steifen Verbindungen 76 und 77 gemäß EP-O 232 829.

Besonders bevorzugt ist als substituierter aromatischer Rest in diesem Zusammenhang ein in 1-Stellung substituierter 3,5-verknüpfter Phenylenrest.

Es wurde ferner gefunden, daß sich aus diesen Polyamiden geordnete Schichten, z.B. mit Hilfe der Langmuir-Blodgett-Technik auf einem festen Schichtträger herstellen lassen.

Die beschriebenen Polyamide lassen sich dadurch herstellen, daß man ein Diamin der Formel

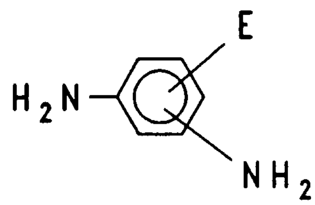

mit etwa äquimolaren Mengen einer Dicarbonsäure COOH-Y-COOH oder einem aktivierten Derivat dieser Dicarbonsäure umsetzt, wobei E und Y die oben beschriebene Bedeutung aufweisen. Aktivierte Derivate der Dicarbonsäuren sind beispielsweise die Säurechloride, die Thiophenylester, oder andere aktivierte Ester.

Beispiele für einsetzbare Dicarbonsäuren finden sich in Tabelle 1, Beispiele für einsetzbare Diamine in Tabelle 2, Beispiele für hergestellte Polyamide in Tabelle 3.

Für die Polykondensation können statt je eines Diamins bzw. eines Disäuredichlorids auch Gemische von Diaminen bzw. Disäuredichloriden eingesetzt werden.

Zur Herstellung von Schichtelementen werden die erfindungsgemäßen Polyamide oder Mischungen, die sie, vorzugsweise zu 10-100 Gew.-%, enthalten (Rest: andere Amphiphile), in einem verdunstbaren, mit Wasser nicht mischbaren Lösungsmittel gelöst und auf die Oberfläche einer wäßrigen Lösung in einer Filmwaage gebracht (= gespreitet). Aus der Abmessung der Oberfläche, dem Spreitvolumen und der Konzentration der Lösung wird die mittlere Fläche pro Repetiereinheit berechnet. Phasenübergänge bei der Kompression der Moleküle lassen sich in der Schub-Flächen-Isotherme verfolgen.

Die Moleküle werden mit einer Barriere zusammengeschoben, wobei die Alkylketten bei wachsender Oberflächendichte im wesentlichen senkrecht zur Grenzschicht orientiert werden. Während der Kompression entsteht durch Selbstorganisation der Moleküle an der Grenzschicht ein monomolekularer Film, dessen konstante Schichtdicke durch die Kettenlänge der Moleküle und deren Tiltwinkel (das ist der Winkel, um den die Molekülketten auf der Wasseroberfläche gegen die Normale gekippt sind) bestimmt wird. Die typische Dicke eines solchen Films liegt bei 2 - 3 nm.

Der Film wird bei konstantem Schub durch Eintauchen oder Austauchen eines geeigneten Trägers unter Erhalt der Ordnung von der Wasseroberfläche abgenommen.

Es wurde ferner gefunden, daß Schichten aus bestimmten Polyamiden beim Erhitzen in Folge einer chemischen Reaktion ihre Schichtdicke verringern und daß die dabei entstehende Schicht eine besonders hohe thermische Beständigkeit aufweist.

Zur Herstellung eines entsprechenden Schichtelements aus einem festen Schichtträger und mindestens einer hierauf aufgebrachten festen, dünnen Schicht aus einem Polyamid, wird ein Polyamid der allgemeinen Formel (II )

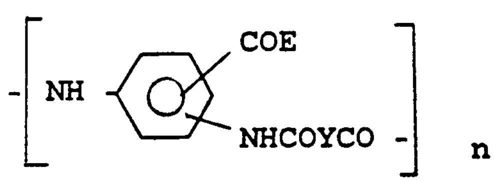

(II )

eingesetzt, in der

E = $OR^2$ oder $NR^2R^3$

$R^2$ = $C_6$ bis $C_{26}$-Alkyl, insbesondere $C_6$ bis $C_{24}$-Alkyl

$R^3$ = H oder $C_1$ bis $C_{26}$-Alkyl, insbesondere $C_1$ bis $C_{24}$-Alkyl

Y = $(CH_2)_a$ oder $(CH_2OCH_2)_b$

a = eine ganze Zahl von 1 bis 12,

b = eine ganze Zahl von 1 bis 13 und

n = eine ganze Zahl über 4

bedeutet. Zur Verbesserung der Temperaturstabilität der erhaltenen Filme kann der beschichtete Träger während einer Zeit, die ausreichend ist, um die Dicke der Schicht um mindestens 5 % zu verringern, bei einer Temperatur von 150 bis 450 °C gehalten werden.

Auch in diesem Fall werden die Polyamide oder Mischungen, die die erfindungsgemäßen Polyamide, vorzugsweise zu 10 - 100 Gew% enthalten, in einem im wesentlichen flüchtigen, mit Wasser nicht mischbaren Lösungsmittel gelöst und auf die Oberfläche einer wäßrigen Lösung in einer Filmwaage gebracht (=gespreitet), die Schicht nach Verdunsten des Lösungsmittels komprimiert und nach der Langmuir-Blodgett-Technik auf einen festen Schichtträger übertragen.

Man kann nach der angegebenen Technik eine oder mehrere Monolagen des Polyamids der allgemeinen Formel II auf den Träger aufbringen. Man kann das Erhitzen auf 150 bis 450 °C nach dem Aufbringen einer einzelnen Monolage vornehmen. Einfacher ist es, wenn man mehrere, d.h. mindestens zwei, noch besser mindestens 10 Monolagen des beschriebenen Polyamids nach der LB-Technik auf den Schichtträger überträgt und dann den beschichteten Schichtträger erhitzt.

Der Ausdruck "Verringerung der Schichtdicke um mindestens 5 %" bezieht sich auf jenen Teil der Schicht, der diesem Erhitzungsprozeß noch nicht unterworfen war. Die Schichtdicke läßt sich u.a. ellipsometrisch bestimmen. Je mehr Monolagen eine Schicht enthält, um so größer ist die Genauigkeit, mit der sich die prozentuale Schichtdickenverringerung beim Erhitzen feststellen läßt.

Die auf den Träger aufgebrachten Filme von Polyamiden der allgemeinen Formel II zeichnen sich durch eine gute Temperaturbeständigkeit aus, die durch den Tempervorgang an Luft noch erheblich verbessert werden kann. Bei dem Tempervorgang wird die Probe auf eine Temperatur von 150 - 450 °C aufgeheizt und 0,5 - 240, vorzugsweise 2-200 Minuten bei dieser Temperatur gehalten. Während dieses Vorgangs nimmt die Schichtdicke des Films gleichmäßig ab auf einen Wert, der je nach Temperatur, Temperzeit und Substanz verschieden sein kann. Typische Werte für die Dickenabnahme liegen im Bereich zwischen 10 und 80%; allerdings sind auch Werte außerhalb dieses Bereichs möglich. Infrarotspektroskopische Untersuchungen an den Filmen zeigen, daß beim Tempern im wesentlichen die Alkylseitenkette abgespalten wird. Nach dem Tempern sind die Filme bis zu Temperaturen von über 450 °C noch stabil.

Die eingesetzten Polyamide der allgemeinen Formeln I und II leiten sich von im Kern substituierten 1,2- oder 1,3- oder 1,4-Phenylendiaminen ab. Vorzugsweise leiten sie sich ab von 1,3-Phenylen-diaminen, die den Substituenten in 5-Stellung tragen.

Als Subphase für die Monofilmherstellung dienen meist Wasser oder wäßrige Lösungen. Es sind aber auch andere Flüssigkeiten mit hoher Oberflächenspannung, wie z. B. Glyzerin, Glykol, Dimethylsulfoxid, Dimethylformamid oder Acetonitril verwendbar, soweit die Polyamide sich in diesen Flüssigkeiten nicht lösen.

Als Träger kommen beliebige feste, vorzugsweise dimensionsstabile Substrate aus unterschiedlichen Materialien in Betracht. Die als Schichtträger dienenden Substrate können beispielsweise transparent oder lichtdurchlässig, elektrisch leitend oder isolierend sein. Das Substrat kann hydrophob oder hydrophil sein. Die Oberfläche des Substrats, auf die die LB-Schicht aufgebracht wird, kann hydrophobiert sein. Die zu beschichtende Oberfläche des Substrats sollte möglichst rein sein, damit die Ausbildung einer dünnen, geordneten Schicht nicht gestört wird. Insbesondere die Anwesenheit von oberflächenaktiven Stoffen auf der zu beschichtenden Oberfläche der Substrate kann die Schichtherstellung beeinträchtigen. Es ist möglich, die als Schichtträger dienenden Substrate auf der zu beschichtenden Oberfläche vor dem Aufbringen der LB-Filme zunächst mit einer Zwischenschicht zu versehen, um z.B. die Haftung des Films auf dem Substrat zu verbessern.

Als Materialien für die Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind Kunststoffe, wie beispielsweise Polyester, etwa Polyethylenterephthalat oder Polybutylenterephthalat, Polyvinylchlorid, Polyvinylidenchlorid, Polytetrafluorethylen, Polystyrol, Polyethylen oder Polypropylen.

Gleichermaßen kommen auch Halbleiter, wie Silizium, Germanium oder Galliumarsenid oder auch Glas, Siliziumdioxid, keramische Werkstoffe oder Celluloseprodukte für die Substrate in Betracht. Die Oberfläche von Glas und anderen hydrophilen Substraten kann, sofern erforderlich, in an sich bekannter Weise durch Umsetzung mit Alkylsilanen oder Hexamethyldisilazan hydrophobiert werden. Die Auswahl der Substratmaterialien richtet sich in erster Linie nach dem Verwendungszweck der aus dem erfindungsgemäßen Film hergestellten Schichtelemente. Für optische Elemente werden in der Regel transparente, lichtdurchlässige Substrate als Schichtträger eingesetzt. Werden die erfindungsgemäßen Schichtelemente beispielsweise in der Elektronik oder bei elektrochemischen Prozessen verwendet, dienen als Substrate insbesondere elektrisch leitfähige Materialien, wie Metalle oder metallische Oberflächenschichten, beispielsweise auf Kunststoffolien oder Glas.

Die als Träger für die erfindungsgemäßen Filme dienenden Substrate können, je nach Verwendungszweck, beliebige Formen aufweisen. Beispielsweise können sie film-, folien-, platten-, bandförmig oder auch zylinderförmig sein oder unter anderen beliebigen Formen ausgewählt werden. Im allgemeinen wird es sich bei den Schichtträgern um flache, ebene Substrate handeln, wie z.B. Filme, Folien, Platten, Bänder und dergleichen. Die zu beschichtende Oberfläche der Substrate ist vorzugsweise glatt, wie es für die Herstellung von LB-Filmen üblich ist. Bei flachen, ebenen Substraten können die erfindungsgemäßen Filme auf eine oder beide Oberflächen des Substrats aufgebracht werden.

Der erfindungsgemäße Film zeichnet sich durch eine stabile Multischichtstruktur mit wenigen Defektstellen und einer durch die Molekülstruktur einstellbaren Ordung in der Schicht aus.

Solche Filme auf Substraten eignen sich beispielsweise in optischen Wellenleitersystemen oder zur Herstellung von Filtern für optische Zwecke. Aufgrund der geringen kritischen Oberflächenspannung sind die Filme auch zur Verbesserung der Reibungseigenschaften von Materialien, zur Herstellung von Schutzschichten sowie für weitere einschlägige Anwendungen geeignet.

Die Erfindung wird durch die nachfolgenden Beispiele näher erläutert.

Beispiel 1 : Ellipsometrische Schichtdicken- und Brechungsindexmessungen an LB-Filmen nach verschiedenen Tempervorgängen

Ein Siliziumplättchen (40 mm x 10 mm) wird aus einem Siliziumwafer herausgeschnitten und wie folgt gereinigt:

1. 1 Stunde Behandlung in einer heißen (60 °C), frisch angesetzten Mischung aus einem Teil 30 %iger $H_2O_2$ und vier Teilen konz. $H_2SO_4$. Anschließend wird mit sauberem Wasser abgespült.
2. 30 Sekunden Eintauchen in $NH_4F$ gepufferte HF-Lösung und anschließend wieder mit sauberem Wasser abspülen. Nach dieser Behandlung sind die Siliziumplättchen hydrophob (Kontaktwinkel zu Wasser: 75°)

Schichten des Polyamids aus 3,5-Diaminobenzoesäure-N-octadecylamid und Adipinsäure (MW = 100 000) werden nach dem Verfahren von Langmuir und Blodgett auf Siliziumplättchen übertragen (Übertragungsparameter: Subphase: Wasser von 30 °C, Schub: 30 mN/m, Eintauchgeschwindigkeit: 10 mm/min, Austauchgeschwindigkeit: 20 mm/min, Pause am oberen Umkehrpunkt: 60 s). Es werden Proben mit jeweils 8, 20, und 30 Monolagen hergestellt. Danach werden die Proben auf einer zuvor temperierten Heizplatte für jeweils 5 Minuten an Luft auf Temperaturen von 160 °C, 250 °C und 320 °C gebracht. Zwei Vergleichsproben werden unbehandelt belassen. Sodann werden ellipsometrisch die Schichtdicken der unterschiedlich getemperten und ursprünglich unterschiedlich dick beschichteten Proben bestimmt und mit den Dicken der unbehandelten Proben verglichen. Bei der 160 °C-Probe ist keine Dickenabnahme zu beobachten. Die Dicke der 250 °C-Probe hat um 18 % und diejenige der 320 °C-Probe um 72 % gegenüber der Ausgangsdicke abgenommen. In allen Fällen ist die Dickenabnahme gleichmäßig und proportional zur Ausgangsdicke der LB-Filme.

Beispiel 2: Infrarotspektroskopische ATR-Messungen an getemperten und ungetemperten Schichten

Beidseitig polierte, undotierte Siliziumplättchen (50 mm x 10 mm x 1 mm) werden an den Stirnkanten trapezförmig im Winkel von 45° angeschliffen und poliert, so daß sie als Substrat für Infrarot-ATR-Messungen eingesetzt werden können. Die Plättchen werden wie in Beispiel 1 gereinigt, vorbehandelt und nach dem Verfahren von Langmuir und Blodgett mit Schichten aus einem Polyamid aus 3,5-Diaminobenzoesäure-N-octadecylamid und Adipinsäure (MW = 100 000) beschichtet (Übertragungsparameter: Subphase: Wasser von 30 °C, Schub: 30 mN/m, Eintauchgeschwindigkeit: 10 mm/min, Austauchgeschwindigkeit: 20 mm/min, Pause am oberen Umkehrpunkt: 60 s). Danach werden von den Proben Infrarot-ATR Spektren (ATR = abgeschwächte Totalreflexion) mit einem Gitter spektrometer der Firma Perkin-Elmer (PE 580B) im Wellenlängenbereich zwischen 4000 und 1200 $cm^{-1}$ aufgenommen. Danach werden die Proben wie in Beispiel 1 bei Temperaturen von 160 °C, 250 °C, 320 °C und 420 °C getempert und erneut infrarotspektroskopisch vermessen. Ein Vergleich der Spektren zeigt folgendes: Durch Tempern bei 160 °C ergeben sich keine Änderungen. Tempern bei 250 °C hat eine leichte Abnahme im Bereich der CH-Schwingungen zwischen 3000 und 2500 $cm^{-1}$ zur Folge. Nach der 320 °C Behandlung sind diese Absorptionsbanden fast völlig verschwunden, während diejenigen im Bereich von Wellenzahlen kleiner als 1800 $cm^{-1}$ nur um etwa die Hälfte abgenommen haben. Tempern bei 420 °C hat eine weitere, jedoch keineswegs vollständige Abnahme der Absorption bei Wellenzahlen kleiner als 1800 $cm^{-1}$ zur Folge.

Beispiel 3:

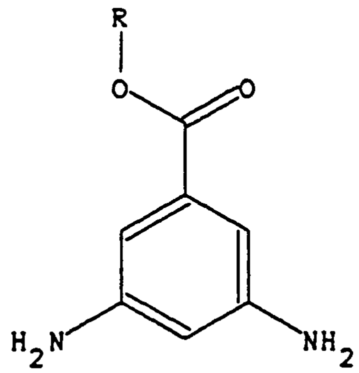

$R = -(CH_2)_{17}-CH_3$

135.25 g (0.5 mol) Octadecanol und 75.6 g (0.75 mol) Triethylamin werden 1.2 l trockenem Chloroform gelöst und mittels Eiskühlung auf 10 °C abgekühlt. Dann wird innerhalb von 1.5 Stunden eine Lösung von 12.07 g (0.52 mol) 3,5-Dinitrobenzoylchlorid in 350 ml trockenem Chloroform so zudosiert, daß die Temperatur nicht über 15 °C steigt. Nach beendeter Zugabe wird unter Rühren auf Raumtemperatur erwärmt und bei Raumtemperatur noch 2 Stunden nachgerührt. Die Reaktionslösung wird anschließend je drei Mal mit 1N HCl, Wasser, 5% $Na_2CO_3$-Lösung und wieder Wasser ausgeschüttelt, die organische Phase mit $Na_2SO_4$ getrocknet und das Lösungsmittel im Vakuum abgezogen. Das Rohprodukt wird aus Ethanol umkristallisiert und im Vakuum bei 30 °C getrocknet. Man erhält 183 g (0.39 mol, 79% d. Th.) leicht gelb gefärbte Kristalle vom Schmelzpunkt 74 - 78 °C.

$^1$H-NMR ($CDCl_3$, 100 MHz): $\delta$ = 0.87 (t), 1.1-1.6 (m), 1.7-2.0 (m), 4.45 (t), 9.1-9.3 (m)

181 g (0.39 mol) 3.5-Dinitrobenzoesäureoctadecylester werden in 700 ml Toluol gelöst und bei 100 °C und 20 Bar $H_2$ mit 5 g Pt-Kohle Kontakt 2 Stunden lang in einem 2 l Edelstahlautoklaven hydriert. Nach dem Abfiltrieren des Katalysators wird das Lösungsmittel im Vakuum abgezogen und das Rohprodukt aus Ethylacetat und Ethanol umkristallisiert. Man erhält 142 g (0.35 mol, 90 % d.Th.) eines weissen Pulvers mit Schmelzpunkt 86 - 87 °C.

$^1$H-NMR (Dimethylsulfoxid-$d^6$, 100 MHz): $\delta$ = 0.86 (t), 1.1-1.5 (m), 1.5-1.9 (m), 4.15 (t), 4.9 (s), 6.01 (t), 6.41 (d)

Analog zu dieser Vorschrift wurden auch der n-Tetradecylester, der n-Hexadecylester, das N-Hexadecylamid, das N-Octadecylamid und das N,N-Dioctadecylamid der 3,5-Diaminobenzoesäure hergestellt.

Beispiel 4: Polykondensation mit Adipinsäuredichlorid

4.0 g des in Beispiel 3 hergestellten Diamins und 7.1 g Triethylamin werden in 50 ml frisch destilliertem N-Methylpyrrolidon (NMP) gelöst. Unter Eiskühlung wird bei 5 °C eine Lösung von 1.83 g Adipinsäurechlorid in frisch destilliertem NMP zugegeben und 10 Minuten gerührt. Dann wird auf 70 °C erhitzt und weitere 50 Minuten bei dieser Temperatur gerührt. Nach dem Abkühlen gibt man zum Lösen des ausgefallenen Produkts 2g LiOH dazu und fällt das Polyamid durch Eingießen in 1 l Methanol aus. Das erhaltene Produkt (1.6 g) hat eine Molmasse von $M_w$ = 47 000 (Lichtstreuung).

Analog zu dieser Vorschrift konnten (mit leichten Abwandlungen) auch die anderen synthetisierten Diamine mit Adipinsäure polykondensiert werden.

Beispiel 5: Polykondensation mit Diglykoldisäurechlorid

4.04 g 3.5-Diaminobenzoesäure-N-octadecylamid und 7.1 g Triethylamin werden in 50 ml frisch destilliertem N-Methylpyrrolidon (NMP) gelöst. Unter Eiskühlung wird bei 5 °C eine Lösung von 1.71 g Diglykoldisäurechlorid in frisch destilliertem NMP zugegeben und 10 Minuten gerührt. Dann wird auf 70 °C erhitzt und weitere 50 Minuten bei dieser Temperatur gerührt. Nach dem Abkühlen gibt man zum Lösen des ausgefallenen Produkts 3 g LiOH dazu und fällt das Polyamid durch Eingießen in 500 ml Methanol aus. Das erhaltene Produkt (4.04 g) hat eine Molmasse von $M_w$ = 45 000 (Lichtstreuung).

Analog zu dieser Vorschrift konnten (mit leichten Abwandlungen) auch die anderen synthetisierten Diamine mit Diglykoldisäure polykondensiert werden.

Beispiel 6: Schichtherstellung nach dem LB-Verfahren

Ein Glas-Objektträger (76 mm x 26 mm) wird nach folgendem Verfahren gereinigt:
Das Glas wird eine Stunde lang in eine 60 °C warme, frisch angesetzte Mischung aus vier Teilen konz. $H_2SO_4$ und einem Teil 30 %iger $H_2O_2$ gelegt, mit sauberem Wasser abgespült und 15 Minuten lang in einer Reinigungslösung (®Extran AP 11, Konz. 2-4 g/l) bei 50 °C ultrabeschallt. Danach wird wieder gründlich mit sauberem Wasser abgespült und in einem warnen Luftstrom getrocknet. Anschließend erfolgt zur Hydrophobisierung eine Behandlung mit Hexamethyldisilazan-Dampf (10 Minuten bei 70 °C).

Multischichten aus dem in Beispiel 5 hergestellten Polyamid werden nach dem Verfahren von Langmuir und Blodgett auf den Glasträger übertragen, indem in einer Langmuir-Filmwaage 0.25 $cm^3$ einer Lösung von 5 mg des Polyamids in 10 $cm^3$ einer Mischung aus 1 ml N-Methylpyrrolidon und 9 ml $CH_2Cl_2$ auf einer wäßrigen Subphase bei einer Subphasentemperatur von 30 °C gespreitet werden. Durch Verkleinerung der monofilmbedeckten Wasseroberfläche wird der Schub auf 30 mN/m eingeregelt und bei diesem Wert konstant gehalten. Der Träger wird nun senkrecht von oben durch die Wasseroberfläche in die Filmwaage eingetaucht (Eintauchgeschwindigkeit: 10 - 50 mm/min) und nach einer kurzen Pause (10 sec.) am unteren Umkehrpunkt wieder herausgenommen (Austauchgeschwindigkeit: 10 mm/min). Sowohl beim Eintauch- als auch bei Austauchvorgang wird dabei eine Monolage auf den Träger übertragen. Durch mehrfache Wiederholung des Tauchvorgangs nach jeweils einer Minute Wartezeit am oberen Umkehrpunkt werden insgesamt 20 Doppelschichten übertragen. Die Übertragungsverhältnisse liegen bei 90%. Es werden, auch bei Übertragung von 50 und mehr Monolagen optisch klare, transparente Schichten erhalten.

Beispiel 7: Ellipsometrische Schichtdicken- und Brechungsindexmessungen

Ein Siliziumplättchen (40 mm x 10 mm) wird aus einem Siliziumwafer herausgeschnitten und wie folgt gereinigt:

1. 1 Stunde Behandlung in einer heißen (60 °C), frisch angesetzten Mischung aus einem Teil 30 %iger $H_2O_2$ und vier Teilen konz. $H_2SO_4$. Anschließend wird mit sauberem Wasser abgespült.
2. 30 Sekunden Eintauchen in $NH_4F$ gepufferte HF-Lösung und anschließend wieder mit sauberem Wasser abspülen.

Nach dieser Behandlung sind die Siliziumplättchen hydrophob (Kontaktwinkel zu Wasser: 75°).

Schichten des in Beispiel 4 hergestellten Polyamids werden wie in Beispiel 7 auf das Siliziumplättchen nach dem Verfahren von Langmuir und Blodgett übertragen (Subphase: Wasser von 30 °C, Schub: 20 mN/m, Eintauchgeschwindigkeit: 20 mm/min, Austauchgeschwindigkeit: 10 mm/min, Pause am oberen Umkehrpunkt: 1 min.). Es werden jeweils sowohl beim Eintauchen als auch beim Austauchen eine Monolage übertragen (Übertragungsverhältnis: 95%). Es werden jeweils Proben mit 10, 20, 30 und 40 Monolagen des Polyamids hergestellt und ellipsometrisch die Schichtdicken und der Brechungsindex der LB-Filme gemessen (Ergebnis: Brechungsindex bei 633 nm: 1.57, Schichtdicke: 2.28 nm/Monolage).

Beispiel 8: Messungen der thermischen Stabilität

Ein Siliziumplättchen (40 mm x 10 mm) wird aus einem thermisch oxidierten Siliziumwafer (Dicke der Oxidschicht: 160 nm) herausgeschnitten und eine Stunde lang bei 60 °C in eine frisch zubereitete Mischung aus einem Teil 30 %iger $H_2O_2$ und vier Teilen konz. $H_2SO_4$ gelegt. Nach gründlichem Abspülen mit sauberem Wasser wird das Plättchen 15 Minuten lang bei 50 °C in einem Ultraschallbad mit alkalischem Reinigungsbad (®Extran AP 11, Konz. 2-4 g/l) behandelt, mit sauberem Wasser gründlich abgespült und in einem warmen Luftstrom getrocknet. Danach erfolgt zur Hydrophobisierung eine Behandlung mit Hexamethyldisilazan-Dampf (10 Minuten bei 70 °C).

Die Beschichtung nach der LB-Methode mit 8 Monolagen erfolgt mit dem in Beispiel 4 hergestellten Polyamid wie in Beispiel 7 beschrieben.

Der beschichtete Träger wird in einer spezielle Apparatur mit linearem Temperaturgradienten (0.5 °C/sec) aufgeheizt. Während des Aufheizvorgangs wird die Dicke der LB-Schicht anhand der Intensität eines von der Probe reflektierten, senkrecht polarisierten Laserstrahl (633 nm) gemessen. Die Temperatur, bei der die maximale Änderung der Schichtdicke erfolgt, beträgt bei dem verwendetem Polyamid 180 °C (Zum Vergleich: Bei LB-Schichten aus 22-Tricosensäure beträgt diese Temperatur 70 °C).

Beispiel 9: Messungen der kritischen Grenzflächenenergie

Ein Siliziumplättchen (40 mm x 10 mm) wird wie in Beispiel 7 gereinigt und wie in Beispiel 8 mit 8 Monolagen des in Beispiel 4 hergestellten Polyamids beschichtet (Temperatur der Subphase: 35 °C).

Auf die Oberfläche der übertragenen Schichten werden Flüssigkeitstropfen einer Reihe von n-Alkanen ($C_{12}H_{26}$ - $C_{16}H_{34}$) gebracht und die Kontaktwinkel der Flüssigkeitstropfen mit der Oberfläche gemessen. Aus diesen Kontaktwinkeln wird nach dem Verfahren von Zisman die kritische Oberflächenspannung bestimmt. Es ergibt sich ein Wert von 25.1 mN/m. (Zum Vergleich: Bei einer Polyethylen-Oberfläche ergibt sich bei dieser Messung ein Wert von 31 mN/m).

Beispiel 10: Vergleich der Orientierung der Alkylketten von verschiedenen Polykondensaten mittels Infrarot-spektroskopischer Methoden

LB-Multischichten aus den in den Beispiel 4 hergestellten Polykondensaten werden nach dem Langmuir-Blodgett Verfahren, wie in den Beispielen 6 und 7 beschrieben, auf wie in Beispiel 7 gereinigte Siliziumträger (jeweils 20 Monolagen) und auf frisch auf gereinigtes Glas aufgedampfte Goldschichten (Dicke der Au-Schicht: 120 nm, Übertragung von jeweils 19 Monolagen) übertragen.

Von den Substanzen werden Infrarot-Spektren unter drei verschiedenen Bedingungen gemessen, um Aussagen über die Alkylketten machen zu können.

1. Messung des IR-Spektrum eines KBr-Preßlings: Im KBr-Preßling sind die Moleküle isotrop verteilt. Im Spektrum erhält man daher die Intensitätsverteilung der Absorptionen für eine isotrope Phase.

2. Messung des IR-Spektrums eines LB-Films auf Silizium in Transmission: Bei dieser Messung absorbieren alle Molekülgruppen, die parallel zur Substratoberfläche schwingen, maximal, während alle senkrecht zur Substratoberfläche schwingenden Moleküleinheiten nicht oder nur schwach absorbieren sollten.

3. Messung des IR-Spektrums eines LB-Films auf einer Goldoberfläche in Reflexion bei streifendem Einfall: Bei dieser Messung werden alle elektrischen Feldkomponenten in der Metallebene Null. Daher absorbieren nun alle Molekülteile, die senkrecht zur Substratoberfläche schwingen, maximal, während parallel zur Substratoberfläche keine Schwingungen angeregt werden.

Bei den Schichten aus dem in Beispiel 4 hergestellten Polyamid wurden großen Unterschiede in den drei verschiedenen Spektren gefunden: In Transmission ist die Absorption der CH-Schwingungen zwischen 3000 und 2800 $cm^{-1}$ verstärkt. Die gleichen Banden sind bei Reflexion mit streifendem Einfall deutlich abgeschwächt. Dies bedeutet, daß hier die Alkylketten im wesentlichen senkrecht zur Substratoberfläche ausgerichtet sind.

Beispiel 11: Mikroskopische Beobachtung einer Polyamid LB-Schicht während eines Aufheizvorgangs

Ein Siliziumplättchen wird wie in Beispiel 1 gereinigt, vorbehandelt und mit 40 Monolagen eines Polyamids aus 3,5 Diaminobenzoesäure-tetradecylester und Adipinsäure (MW = 25000) beschichtet (Übertragungsparameter: Subphase: Wasser von 30 °C, Schub: 30 mN/m, Eintauchgeschwindigkeit: 10 mm/min, Austauchgeschwindigkeit: 20 mm/min, Pause am oberen Umkehrpunkt: 60 s). Danach wird das Plättchen zerteilt und ein 10 mm x 10 mm großes Stück davon in einen Mikroskopheiztisch der Firma Linkham gebracht und aufgeheizt. Während des Aufheizens wird die Schicht auf der Probe mikroskopisch nach dem Differentialinterferenzkontrastverfahren beobachtet. Bei 250 °C wird eine Dickenabnahme des Films durch eine Farbänderung sichtbar. Die Dickenabnahme schreitet bei weiterer Temperaturerhöhung fort. Bis zu Temperaturen von über 500 °C ist die Schicht zwar immer dünner, aber dennoch gleichmäßig und ohne sichtbare Defekte vorhanden.

**Tabelle 1: Einsetzbare Dicarbonsäuren**

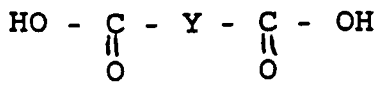

| Y |
|---|
| $-(CH_2)_4-$ |
| $-CH_2OCH_2-$ |
| $-(CH_2OCH_2)_{10}-$ |

**Tabelle 2: Einsetzbare Amine**

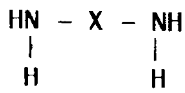

| X |
|---|
| 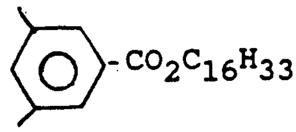 |
| 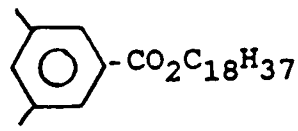 |
| 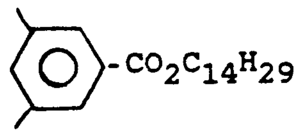 |
| 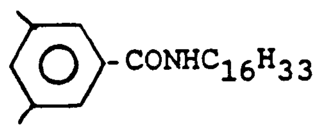 |
| 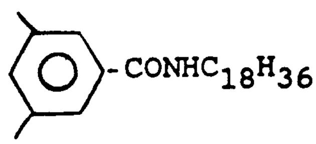 |

**Fortsetzung Tabelle 2**

| X |
| --- |
| 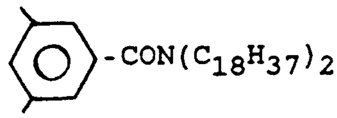 |

**Tabelle 3: Hergestellte Polyamide**

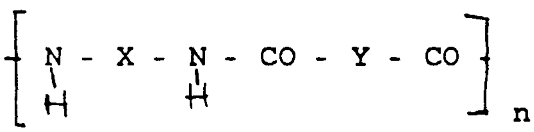

| X | Y |
| --- | --- |
| 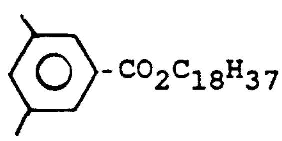 | $-CH_2OCH_2-$ |
| " | $-CH_2CH_2CH_2CH_2-$ |

**Fortsetzung Tabelle 3**

| X | Y |
|---|---|
| 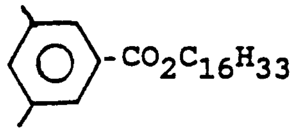 | $-CH_2OCH_2-$ |
| " | $-(CH_2)_4-$ |
| 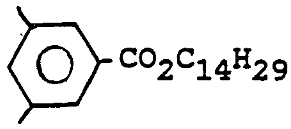 | " |
| " | $-CH_2OCH_2-$ |
| 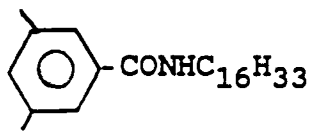 | " |
| " | $-(CH_2)_4-$ |
| 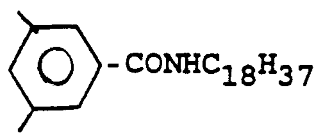 | $-CH_2OCH_2-$ |

## Patentansprüche

**1.** Polyamid, dadurch gekennzeichnet, daß es die allgemeine Formel I

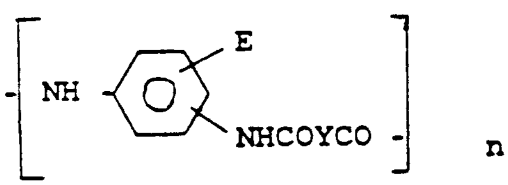

(I)

aufweist, worin

E = $-CO_2R^4$, $-CONR^4R^5$, $-NR^4R^5$, $OR^6$ oder $OCOR^6$,

$R^4$ = eine Alkylgruppe mit 6-26, vorzugsweise 6-24, C-Atomen,

$R^5$ = Wasserstoff oder eine Alkylgruppe mit 1-26, vorzugsweise 6-24, C-Atomen,

$R^6$ = eine Alkylgruppe mit 6-26, vorzugsweise 6-24, insbesondere 14-24 C-Atomen,
Y = $(CH_2)_a$ oder $(CH_2OCH_2)_b$,
a = eine ganze Zahl von 1 bis 12,
b = eine ganze Zahl von 1 bis 13 und
n = eine ganze Zahl über 4
bedeutet.

2. Verfahren zur Herstellung eines Polyamids nach Anspruch 1, dadurch gekennzeichnet, daß man ein Diamin der Formel

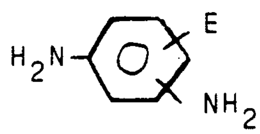

mit etwa äquimolaren Mengen einer Dicarbonsäure

HOOC-Y-COOH

oder einem aktivierten Derivat dieser Dicarbonsäure umsetzt, wobei E und Y die in Anspruch 1 angegebene Bedeutung haben.

3. Schichtelement mit einem festen Schichtträger und mindestens einer hierauf aufgebrachten festen Schicht, die aus mindestens einem monomolekularen Film eines Polyamids gemäß Anspruch 1 mit einer Filmdicke von jeweils 2 bis 3 nm und einer durch das Verfahren von Langmuir-Blodgett erzielbaren regelmäßigen Struktur besteht.

4. Verfahren zur Herstellung eines Schichtelements gemäß Anspruch 3, dadurch gekennzeichnet, daß man mindestens ein Polyamid nach Anspruch 1 in einem verdunstbaren organischen mit Wasser nicht mischbaren Lösemittel löst, die Lösung an der Grenzfläche Wasser/Luft spreitet, die Schicht nach Verdunsten des Lösemittels komprimiert und nach der Langmuir-Blodgettt-Technik auf einen festen Schichtträger überträgt.

5. Verfahren gemäß Anspruch 4, dadurch gekennzeichnet, daß man als Polyamid eine Verbindung der allgemeine Formel (II)

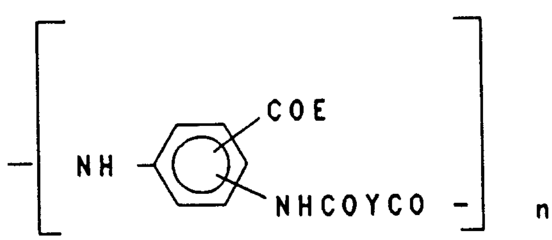

(II)

einsetzt, in der
E = $-OR^2$ oder $-NR^2R^3$
$R^2$ = $C_6$-$C_{26}$-Alkyl, insbesondere $C_6$-$C_{24}$-Alkyl
$R^3$ = H, $C_1$-$C_{26}$-Alkyl, insbesondere $C_1$-$C_{24}$-Alkyl
Y = $(CH_2)_a$ oder $(CH_2OCH_2)_b$
a = eine ganze Zahl von 1 bis 12
b = eine ganze Zahl von 1 bis 13 und
n = eine ganze Zahl über 4
bedeutet,
und man den beschichteten Träger während einer Zeit, die ausreichend ist, um die Dicke der Schicht

um mindestens 5% zu verringern, bei einer Temperatur von 150 bis 450 °C hält.

**6.** Verfahren nach Anspruch 5, dadurch gekennzeichnet, daß man mindestens zwei Monolagen enthaltend ein Polyamid auf den Schichtträger aufbringt und dann Schichtträger mit Beschichtung auf 150 bis 450 °C erhitzt.

**Claims**

**1.** A polyamide which has the general formula (I)

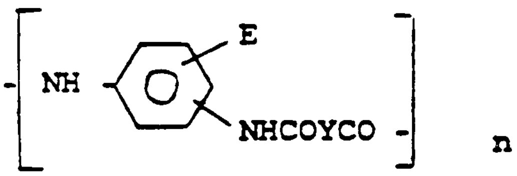

(I)

in which

E = $-CO_2R^4$, $-CONR^4R^5$, $-NR^4R^5$, $OR^6$ or $OCOR^6$
$R^4$ = an alkyl group having 6-26, preferably 6-24, carbon atoms,
$R^5$ = hydrogen or an alkyl group having 1-26, preferably 6-24, carbon atoms,
$R^6$ = an alkyl group having 6-26, preferably 6-24, particularly 14-24, carbon atoms
Y = $(CH_2)_a$ or $(CH_2OCH_2)_b$,
a = an integer from 1 to 12,
b = an integer from 1 to 13, and
n = an integer greater than 4.

**2.** A process for the preparation of a polyamide as claimed in claim 1, which comprises reacting a diamine of the formula

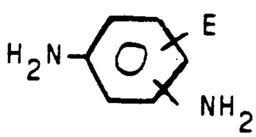

with approximately equimolar amounts of a dicarboxylic acid

COOH - Y - COOH

or an activated derivative of this dicarboxylic acid,
where E and Y have the meaning given in claim 1.

**3.** A layer element having a solid layer support and at least one solid layer applied thereto, which layer comprises at least one monomolecular film of a polyamide, as claimed in claim 1, having a film thickness of in each case 2 to 3 nm and an orderly structure which is achievable by the Longmuir-Blodgett technique.

**4.** A process for the preparation of a layer element as claimed in claim 3, which comprises dissolving at least one polyamide as claimed in claim 1 in a volatile organic solvent which is immiscible with water, spreading the solution on the water/air interface, compressing the layer after evaporation of the solvent and transferring it to a solid layer support by the Langmuir-Blodgett technique.

5. The process as claimed in claim 4, wherein a compound of the general formula (II) is used as

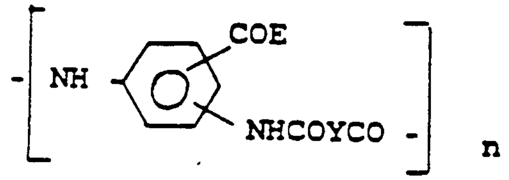

(II)

polyamide, in which

E = $OR^2$ or $-NR^2R^3$

$R^2$ = $C_6$-$C_{26}$alkyl, particularly $C_6$-$C_{24}$alkyl

$R^3$ = H, $C_1$-$C_{26}$alkyl, particularly $C_1$-$C_{24}$alkyl

Y = $(CH_2)_a$ or $(CH_2OCH_2)_b$

a = an integer from 1 to 12

b = an integer from 1 to 13 and

n = an integer greater than 4

and the coated support is kept at a temperature of 150 to 450 °C for a period which is sufficient to reduce the thickness of the layer by at least 5%.

6. The process as claimed in claim 5, wherein at least two monolayers containing a polyamide are applied to the layer support and then layer support with coating is heated at from 150 to 450 °C.

## Revendications

1. Polyamide caractérisé en ce qu'il est représenté par la formule générale I

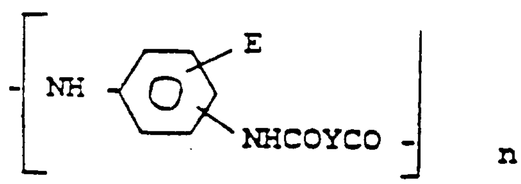

(I)

dans laquelle

E signifie les $-CO_2R^4$, $-CONR^4R^5$, $-NR^4R^5$, $OR^6$ ou $OCOR^6$,

$R^4$ signifie un groupe alkyle ayant de 6 à 26 atomes de carbone, de préférence de 6 à 24,

$R^5$ signifie un hydrogène ou un groupe alkyle ayant de 1 à 26 atomes de carbone, de préférence de 6 à 24,

$R^6$ signifie un groupe alkyle ayant de 6 à 26 atomes de carbone, de préférence de 6 à 24, en particulier de 14 à 24,

Y signifie les $(CH_2)_a$ ou $(CH_2OCH_2)_b$,

a signifie l'un des nombres entiers de 1 à 12,

b signifie l'un des nombres entiers de 1 à 13 et

n signifie l'un des nombres entiers supérieurs à 4.

2. Procédé de préparation d'un polyamide selon la revendication 1, caractérisé en ce que l'on met en réaction une diamine de formule

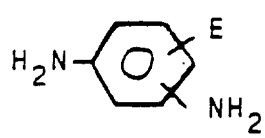

avec une quantité environ équimolaire d'un diacide carboxylique

HOOC-Y-COOH

ou d'un dérivé activé de ce diacide carboxylique, dans lesquelles E et Y ont la signification donnée dans la revendication 1.

**3.** Elément stratifié ("Schichtelement") ayant un support de couche ("Schichträger") solide et au moins une des couches ("Schicht") solides envisagées ci-dessus, qui est formé par au moins un film monomoléculaire de polyamide selon la revendication 1 ayant une épaisseur de film de 2 à 3 nm suivant le cas et une structure régulière accessible selon le procédé de Langmuir-Blodgett.

**4.** Procédé de préparation d'un élément stratifié selon la revendication 3 caractérisé en ce que l'on dissout au moins un polyamide selon la revendication 1 dans un solvant organique volatil non miscible à l'eau, la solution est répendue sur l'interface eau/air, après évaporation du solvant la couche est comprimée et étendue sur le support de couche solide selon la technique de Langmuir-Blodgett.

**5.** Procédé selon la revendication 4 caractérisé en ce que l'on introduit un composé de formule générale (II) en tant que polyamide

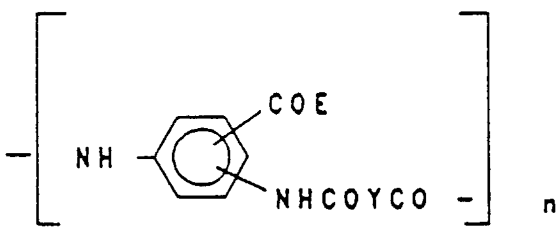

(II)

dans laquelle

E signifie un $-OR^2$ ou un $-NR^2R^3$
$R^2$ signifie un alkyle en $C_6$-$C_{26}$, en particulier un alkyle en $C_6$-$C_{24}$
$R^3$ signifie un hydrogène, un alkyle en $C_1$-$C_{26}$, en particulier un alyle en $C_1$-$C_{24}$
Y signifie les $(CH_2)_a$ ou $(CH_2OCH_2)_b$
a signifie l'un des nombres entiers de 1 à 12
b signifie l'un des nombres entiers de 1 à 13 et
n signifie l'un des nombres entiers supérieur à 4 et l'on porte le support à une température comprise entre 150 °C et 450 °C pendant un temps suffisant pour que l'épaisseur de la couche diminue d'au moins 5 %.

**6.** Procédé selon la revendication 5 caractérisé en ce que l'on dispose au moins deux monocouches contenant un polyamide sur le support de couche et que l'on chauffe ensuite le support de couche avec l'enduction entre 150 ° et 450 °C.